# EUROPÄISCHE PATENTSCHRIFT

(11) **EP 2 092 348 B1**
(45) Veröffentlichungstag und Bekanntmachung des Hinweises auf die Patenterteilung: **28.12.2022**
(21) Anmeldenummer: 07822569.5
(22) Anmeldetag: 14.11.2007
(51) Int. Cl.: G01N 35/10, B01L 3/00, B01L 9/06

(54) **Automatisiertes Analysensystem mit einem Reagenzienkarussell und mit austauschbaren Reagenzienbehältern verschiedener Größen für Flüssigreagenzien**
Automated analysis system with a reagent carousel and with interchangeable reagent containers of different sizes for liquid reagents
Système d'analyse automatisé avec un carrousel de réactifs et des récipients de réactifs interchangeables de différentes tailles pour les réactifs liquides

(30) Priorität: 14.11.2006 DE 202006017454 U
(43) Veröffentlichungstag der Anmeldung: 26.08.2009
(73) Patentinhaber: Diasys Technologies S.A.R.L., 34830 Clapiers (FR)
(72) Erfinder: SCHENK, Roland, 67281 Kirchheim (DE)
(74) Vertreter: WSL Patentanwälte Partnerschaft mbB
(86) Internationale Anmeldenummer: PCT/EP2007/062306
(87) Internationale Veröffentlichungsnummer: WO 2008/058979

(56) Entgegenhaltungen:
- EP-A- 0 192 968
- EP-A- 0 252 632
- EP-A- 0 678 747
- EP-A- 1 225 450
- EP-A- 1 491 897
- EP-A- 1 538 447
- US-A- 5 968 453
- US-A- 5 985 218

## Beschreibung

Die vorliegende Erfindung betrifft Reagenzienbehälter für Flüssigreagenzien mit im wesentlichen kreissektorförmigem, trapezförmigem oder dreieckigem Behälterboden und Behälterdach und sich von dem Behälterboden zu dem Behälterdach im wesentlichen senkrecht erstreckenden und von einer Behälterrückwand zu einer Behältervorderseite aufeinander zulaufenden Behälterseitenwänden, wobei das Behälterdach wenigstens eine verschließbare Behälteröffnung aufweist. Weiterhin betrifft die vorliegende Erfindung ein Reagenzienkarussell mit im wesentlichen kreisförmiger Karussellgrundfläche und auf dieser Karussellgrundfläche radiär angeordneten Fächern zur Aufnahme von Reagenzienbehältern, wobei die Fächer von sich radial erstreckenden Begrenzungen begrenzt sind. Ferner betrifft die Erfindung ein automatisiertes Analysensystem mit den eingangs genannten Reagenzienbehältern und dem zuvor erwähnten Reagenzienkarussell.

Wie in vielen anderen Bereichen, so findet auch in der medizinischen und veterinärmedizinischen Diagnostik eine zunehmende Automatisierung der erforderlichen Verfahrensschritte statt. In diesem Zusammenhang sind insbesondere Analysatoren zu nennen, d. h. automatisierte Analysensysteme, die die verschiedenen für die Durchführung einer Analyse erforderlichen Reagenzien aus automatisch bereitgestellten Reagenzienbehältern entnehmen und zum Zwecke der Durchführung der Analyse mit einer zu untersuchenden Substanz in einem Reaktionsgefäß vereinigen. Für die Durchführung einer solchen Untersuchung ist teilweise die Verwendung lediglich eines Reagenz erforderlich. Bei anderen Analysen müssen zwei oder mehrere verschiedene Reagenzien, teilweise in unterschiedlichen Mengen, bereitgestellt werden. Hierfür sind aus dem Stand der Technik verschiedene Systeme bekannt. Eines dieser Systeme umfasst ein Reagenzienkarussell, in das mehrere Reagenzienbehälter eingestellt werden können, eine Antriebsvorrichtung zur Ausführung der Drehbewegung des Karussells sowie eine Steuerungseinrichtung und einen Pipettierarm.

Die aus dem Stand der Technik bekannten Reagenzienkarussells für Flüssigreagenzienbehälter weisen häufig eine im wesentlichen kreisförmige Karussellgrundfläche auf mit auf dieser Karussellgrundfläche radiär angeordneten Fächern zur Aufnahme der Reagenzienbehälter. Die Form dieser Fächer ist den jeweiligen verwendeten Reagenzienbehältern angepasst, so dass die Fächer meist eine kreisförmige oder rechteckige Fachgrundfläche aufweisen. Es sind jedoch auch runde Reagenzienkarussells kreissektorförmigen Fächern für die Aufnahme entsprechend geformter Behälter bekannt.

Bei den aus dem Stand der Technik bekannten Reagenzienkarussells sind die Fächer für die Reagenzienbehälter auf jeweils einen bestimmten Typ Reagenzienbehälter abgestimmt, d. h., dass die Grundfläche dieser Fächer im wesentlichen der Grundfläche der Reagenzienbehälter, die in diese Fächer eingestellt werden sollen, entspricht.

Demzufolge können in die entsprechend angepassten Reagenzienkarussells auch nur diese bestimmten Reagenzienbehälter so eingestellt werden, dass ein einwandfreier Betrieb des Analysators möglich ist. Hierbei ist zu beachten, dass bei den automatisierten Analysensystemen mit Pipettierarm sehr hohe Anforderungen an eine präzise Positionierung der Reagenzienbehälter gestellt werden, damit gewährleistet ist, dass der Pipettierarm den Reagenzienbehälter und insbesondere die Öffnung zur Reagenzienentnahme exakt an der vorprogrammierten Position vorfindet. Angesichts der teilweise sehr kleinen Öffnungen in den Reagenzienbehältern zur Reagenzienentnahme sind für die Positionierung der Reagenzienbehälter und ihrer Öffnungen äußerst geringe Toleranzen gewünscht. Wird in das Fach eines Reagenzienkarussells ein Reagenzienbehälter eingestellt, der die Fachgrundfläche nicht vollständig ausfüllt, so kann dies zu einer Fehlpositionierung und zu Problemen bei der Reagenzienentnahme führen. Demzufolge können in die Fächer der aus dem Stand der Technik bekannten Reagenzienkarussells nur solche Reagenzienbehälter eingestellt werden, deren Form derjenigen der Fächer exakt angepaßt ist.

Da die mit einem Analysator durchgeführten Analysen häufig unterschiedliche Volumina an Reagenzien benötigen, wäre es jedoch wünschenswert, mit ein und dem selben Reagenzienkarussell verschiedene Reagenzienbehälter aufnehmen zu können, wobei gewährleistet sein muss, dass die Reagenzienbehälter exakt positioniert werden und in dieser Position auch während des Betriebs des Analysators zuverlässig gehalten werden. Besonders vorteilhaft wäre ein System, bei dem möglichst viele verschiedene Reagenzienbehälter in dem Reagenzienkarussell entsprechend positionierbar sind.

EP 0 678 747 A1 offenbart ein Karussell für Flüssigkeitsbehälter, in dem Fachunterteilungen vorgesehen sind, die in einem Abstand vom äußeren Rand Vorsprünge aufweisen. Diese Vorsprünge ermöglichen es, zwischen diesen und dem Rand kreisrunde Reagenzgläser einzustellen. Des Weiteren werden Flüssigkeitsbehälter offenbart, die einen Fachsektor vollständig ausfüllen können und in deren Seitenwänden Aussparungen vorgesehen, damit diese trotz der in den Fächern vorgesehenen Vorsprünge in das Fach eingestellt werden können.

EP 0 252 632 A2 offenbart Kartuschen, die sich über den gesamten Innenraum eines Karussellfaches erstrecken, wobei in den Kartuschen mehrere Flüssigkeitsbehälter angeordnet sind.

US 5,968,453 B beschreibt Reagenzienbehälter mit mehreren Kammern auf, wobei sich der Reagenzienbehälter vollständig über ein Fach, in welches der Reagenzienbehälter einzustellen ist, erstreckt.

In EP 1 225 450 und EP 0 192 968 A2 werden Flüssigkeitsbehälter beschrieben, die eine klassische sektorförmige Grundfläche aufweisen und damit die in den passenden Karussells vorgesehenen Fachinnenräume jeweils vollständig ausfüllen.

Es besteht daher ein Bedarf nach Reagenzienbehältern verschiedener Größen, die zur Aufnahme von einem oder mehreren Reagenzien geeignet sind und die zur Durchführung verschiedener Versuche in dasselbe Reagenzienkarussell einstellbar sind. Die Reagenzienbehälter sollten hierbei so gestaltet sein, daß sie in dem Reagenzienkarussell exakt positioniert werden und in dieser Position auch während des Betriebs zuverlässig fixiert sind. Insgesamt besteht ein Bedarf nach einem System, dass eine möglichst große Flexibilität hinsichtlich der Auswahl der Reagenzienbehälter für ein bestimmtes Reagenzienkarussell bietet, ohne dass es erforderlich ist, ein zweites Karussell mit vom ersten Karussell verschiedener Fächergröße bereit zu halten.

Diese Aufgabe wird gelöst durch ein automatisiertes Analysensystem mit einem Reagenzienkarussell (20) und mit austauschbaren Reagenzienbehältern für Flüssigreagenzien der eingangs genannten Art, wobei das automatisierte Analysensystem dadurch gekennzeichnet ist, daß es die Merkmale des Patentanspruchs 1 aufweist.

Die Reagenzienbehälter haben den Vorteil, daß sie eine Positionierungsnut oder Positionierungsanschlagfläche aufweisen, die im wesentlichen senkrecht über wenigstens eine der Behälterwände verläuft. Diese Positionierungsnut oder Positionierungsanschlagfläche ermöglicht es, dass man einen erfindungsgemäßen Reagenzienbehälter in das Fach eines Reagenzienkarussells einstellt, in dem ein in den Innenraum des Faches hineinragender Vorsprung vorgesehen ist, der so angeordnet ist, dass er in die Nut eingreift bzw. an der Anschlagfläche des Reagenzienbehälters anliegt. Der Eingriff bzw. Anschlag erfolgt vorzugsweise formschlüssig und/oder kraftschlüssig.

Durch den Eingriff oder Anschlag des Vorsprungs mit bzw. an der erfindungsgemäß an dem Reagenzienbehälter vorgesehenen Nut bzw. Anschlagfläche wird der Reagenzienbehälter in die gewünschte Position im Fach geführt und in dieser Position fixiert. Auf diese Weise können auch solche Reagenzienbehälter im entsprechenden Karussellfach positionsstabil eingestellt werden, die nicht die gesamte Fachgrundfläche einnehmen. Bei den entsprechend eingestellten und durch den Eingriff oder Anschlag von Vorsprung und Nut bzw. Anschlagfläche fixierten Reagenzienbehältern ist gewährleistet, dass sie auch im Betrieb stets in der Position verbleiben, in der sie ursprünglich eingestellt wurden, wodurch gesichert ist, dass die im Behälterdach vorgesehene Behälteröffnung stets in der Position ist, in der der Pipettierarm eines Analysators in den Behälter eindringen soll, um das Reagenz zu entnehmen.

Der Begriff "Nut" oder "Positionierungsnut" im Rahmen der vorliegenden Erfindung bezeichnet jede im wesentlichen senkrecht über eine Behälterseitenwand verlaufende Aussparung oder Vertiefung umfasst, in die ein entsprechend ausgestalteter in den Fachinnenraum ragender Vorsprung des Reagenzienkarussells (zum Beispiel ein Zapfen oder eine Leiste) eingreifen kann.

Der Begriff "Anschlagfläche" oder "Positionierungsanschlagfläche" im Rahmen der vorliegenden Erfindung bezeichnet eine Anschlagfläche im Bereich des Übergangs von einer Behälterseitenwand zu der Behältervorderseite oder der Behälterrückwand. Vorzugsweise ist die Anschlagfläche als Abfasung am Übergang von wenigstens einer Behälterseitenwand zu der Behältervorderseite besonders bevorzugt am Übergang beider Behälterseitenwände zu der Behältervorderseite ausgebildet.

Vorzugsweise ist an beiden Behälterseitenwänden jeweils wenigstens eine vom Behälterboden ausgehende und sich vertikal in Richtung des Behälterdaches erstreckende Positionierungsnut oder Positionierungsanschlagfläche vorgesehen. Auf diese Weise wird eine besonders gute Fixierung erreicht. Bei bevorzugten Ausführungsformen sind die an beiden Behälterseitenwänden vorgesehenen Positionierungsnuten oder Positionierungsanschlagflächen in gleichem Abstand von der Behälterrückwand angeordnet. Alternativ können die an beiden Behälterseitenwänden vorgesehenen Positionierungsnuten in unterschiedlichem Abstand von der Behälterrückwand angeordnet sein.

Bei einer Ausführungsform Reagenzienbehälter ist zusätzlich auch an der Behälterrückwand und/oder Behältervorderwand wenigstens eine Positionierungsnut oder Positionierungsanschlagfläche für einen Eingriff bzw. Anschlag mit entsprechenden Vorsprüngen in erfindungsgemäßen Reagenzienkarussells vorgesehen.

Bei einer Ausführungsform Reagenzienbehälter enden die Positionierungsnuten oder Positionierungsanschlagflächen ausgehend vom Behälterboden in einem Abstand zum Behälterdach. Bei einer alternativen Ausführungsformerstreckt sich die Positionierungsnut oder Positionierungsanschlagfläche vom Behälterboden bis zum Behälterdach. Hierdurch wird eine besonders gute Führung und Fixierung des Reagenzienbehälters beim Einstellen in das Fach und während des Betriebs erreicht, da über die gesamte Behälterwand ein Eingriff mit dem in den Fachinnenraum hervorragenden Vorsprung des Reagenzienkarussells erfolgt.

Bei einer besonders bevorzugten Ausführungsform ist die wenigstens eine Positionierungsnut in Form einer Einbauchung vorgesehen, wobei diese Einbauchung sich in den Behälterinnenraum erstreckt. Der Vorteil dieser Ausführungsform liegt darin, dass die Reagenzienbehälterwände sehr dünn ausgeführt sein können, da die erfindungsgemäß vorgesehene Positionierungsnut in ihrer Tiefe nicht auf die Dicke der Behälterwand beschränkt ist, sondern sich in Gestalt einer Einbauchung auch in den Behälterinnenraum erstrecken kann. Insgesamt kann hierdurch ein größeres Innenvolumen des Reagenzienbehälters erreicht werden, da der Behälter das Fachvolumen des Reagenzienkarussells optimal ausnutzen kann.

Bei manchen Behältern weisen diese wenigstens eine Trennwand oder Einschnürung auf, die den Behälterinnenraum in wenigstens zwei separate Kammern unterteilt. Vorzugsweise ist in wenigstens einer Behälterseitenwand eine im wesentlichen senkrecht verlaufende Einschnürung vorgesehen, wobei die wenigstens eine Einschnürung sich durch den Behälterinnenraum bis zu der jeweils gegenüberliegenden Seitenwand erstreckt, wodurch der Behälterinnenraum in zwei separate Kammern unterteilt wird. Besonders bevorzugt ist es, wenn zwei einander gegenüberliegende Einschnürungen der Behälterseitenwände im Behälterinnenraum aufeinandertreffen. Durch die Unterteilung des Reagenzienbehälterinnenraums mittels Einschnürung der Behälterseitenwand bzw. der Behälterseitenwände erhält man Behälter mit mehreren Kammern, sogenannte Zwillingsbehälter, Dreifachbehälter oder Mehrfachbehälter. Solche Mehrfachbehälter haben den Vorteil, dass in ein Karussellfach mit einem einzigen Behälter verschiedene Reagenzien separat eingestellt werden können, so dass ein Pipettierarm in einer Reagenzienkarussellposition zwei oder mehrere Reagenzien, die für die Durchführung eines Versuchs erforderlich sind, entnehmen kann. Besonders bevorzugt sind die Einschnürungen bzw. Trennwände in dem Reagenzienbehälter so vorgesehen, dass die separaten Kammern des Behälterinnenraums unterschiedliche Volumina aufweisen, wobei das Verhältnis der Volumina zueinander vorzugsweise 3 bis 5 zu 1 beträgt. Die ist vorteilhaft, da Reagenzien für Analysen häufig in unterschiedlichen Mengen benötigt werden, so daß die Reagenzien in den erfindungsgemäßen Behältern entsprechend ihrem voraussichtlichen Verbrauch bereitgestellt werden können, ohne daß man Kammern des Reagenzienbehälters nur teilweise befüllen muß oder nach Verbrauch des in höherer Menge benötigten Reagenz das andere Reagenz oder die anderen Reagenzien verwerfen muß.

In einer weiteren Ausführungsform fallen die Einschnürung zur Trennung des Behälterinnenraums in mehrere Kammern und die Positionierungsnut zusammen, d. h. dass eine Einschnürung gleichzeitig die Positionierungsnut darstellt.

In einer besonders bevorzugten Ausführungsform des Reagenzienbehälters weist dieser genau zwei separate Kammern auf.

Bevorzugte Reagenzienbehälter der vorgenannten Art sind dadurch gekennzeichnet, daß für den Zugang zu jeder der Kammern eine verschließbare Behälteröffnung in dem Behälterdach vorgesehen ist, so dass in jede separate Kammer durch diese Öffnungen Reagenz eingebracht und entnommen werden kann. Alternativ kann eine einzelne Kammer oder können mehrere der Kammern keine Behälteröffnung aufweisen, wobei die Kammern ohne Behälteröffnungen als sogenannte Blindkammern bezeichnet werden.

Bei den Reagenzienbehältern, die zwei oder mehr verschließbare Behälteröffnungen in dem Behälterdach haben, weisen diese zweckmäßigerweise einen Abstand zueinander von 0,1 bis 2 cm auf. Die Obergrenze von 2 cm bietet den Vorteil, dass der Pipettierarm zur Entnahme von Reagenz aus beiden Behälteröffnungen nur eine kurze Distanz zurücklegen muss. Hierdurch verringert sich auch insgesamt die erforderliche Größe des Pipettierarms. Dies führt sowohl zu einer Einsparung an Material als auch zu einer Zeitersparnis im Betrieb und zu einer Reduzierung des Totvolumens des Analysators. Der Mindestabstand von 0,1 cm hat den Vorteil, dass ein Verschluß der verschließbaren Behälteröffnungen noch gut von Hand oder einer automatisierten Vorrichtung ergriffen werden kann, ohne dass die benachbarte Behälteröffnung stört. Vorzugsweise beträgt der Abstand zwischen zwei verschließbaren Behälteröffnungen 0,3 bis 1 cm und ganz besonders bevorzugt 0,4 bis 0,5 cm, wenn der Verschluß der Behälteröffnung ein Schraubverschluss ist, der von einer automatisierten Vorrichtung ergriffen und durch Drehen geöffnet oder geschlossen werden soll.

In Abhängigkeit von den in den Reagenzienbehältern eingebrachten Reagenzien besteht der Reagenzienbehälter vorzugsweise aus einem Material, dass entweder für Strahlen bzw. Licht durchlässig oder undurchlässig ist. Besonders bevorzugt ist der Reagenzienbehälter aus einem bruchfesten Material. Darüber hinaus ist das Material vorzugsweise chemisch inert und thermo-, säuren-, laugen- und strahlenbeständig. Besonders bevorzugte Reagenzienbehälter sind aus Kunststoff und vorzugsweise im Extrusionsblasverfahren hergestellt.

Zum Zwecke der weiteren Automatisierung ist es besonders bevorzugt, wenn an dem Reagenzienbehälter eine optisch, elektronisch oder mechanisch erfassbare Markierung vorgesehen ist, über die eine Bedienperson und/oder der Analysator Informationen erfassen kann. Solche Informationen betreffen beispielsweise Größe und Aufbau des Reagenzienbehälters, wie Anzahl der Kammern, Volumen der einzelnen Kammern etc., sowie den Inhalt der einzelnen Kammern des Reagenzienbehälters. Vorzugsweise besteht die erfassbare Markierung in einem Barcode oder einem Transponder.

Das Reagenzienkarussell des Analysensystems gemäß der vorliegenden Erfindung weist eine im wesentlichen kreisförmige Karussellgrundfläche auf und auf dieser Karussellgrundfläche radiär angeordnete Fächer zur Aufnahme der erfindungsgemäßen Reagenzienbehälter, wobei die Fächer von sich radial erstreckenden Begrenzungen begrenzt sind, welche wenigstens einen zum Fachinnenraum weisenden Vorsprung für einen Eingriff mit einer Positionierungsnut oder einer Positionierungsanschlagfläche eines Reagenzienbehälters aufweisen.

Erfindungsgemäß werden die Reagenzienbehälter in den zur Aufnahme der Reagenzienbehälter vorgesehenen Fächern des Reagenzienkarussells fixiert, und zwar auch dann, wenn die Reagenzienbehälter das Fach nicht vollständig ausfüllen. Hierdurch ist es möglich, verschiedene Reagenzienbehälter gemäß der Erfindung in das Reagenzienkarussell einzustellen, ohne daß die Reagenzienbehälter im Betrieb ihre Position verändern, so daß ein Pipettierarm eine in den Reagenzienbehältern vorgesehene Öffnung stets an der programmierten Stelle vorfindet.

Vorzugsweise sind die Begrenzungen, die die Ausdehnung eines Faches in radialer und seitlicher Richtung definieren, als Trennwände ausgestaltet, von denen sich Vorsprünge für den Eingriff oder Anschlag mit den Positionierungsnuten oder Positionierungsanschlägen der Reagenzienbehälter in den Innenraum eines jeweiligen Faches erstrecken. Alternativ können die Begrenzungen auch in Form einer Lochplatte vorgesehen sein, die Aussparungen aufweist, welche der Grundfläche der Fächer entsprechen, wobei diese Lochplatte über der Karussellgrundfläche und im wesentlichen parallel dazu angeordnet ist. In diesem Falle sind die Vorsprünge, die gemäß der vorliegenden Erfindung in den Innenraum eines jeweiligen Faches ragen, an dieser Lochplatte vorgesehen und ragen in die in der Lochplatte vorgesehenen Aussparungen hinein.

In einer bevorzugten Ausführungsform sind pro Fach zwei von gegenüberliegenden Seiten in Richtung des Reagenzienbehälters weisende Vorsprünge in Form von Zapfen oder Leisten für den Eingriff oder Anschlag mit entsprechenden Positionierungsnuten oder Positionierungsanschlägen eines Reagenzienbehälters vorgesehen. Je mehr senkrecht angeordnete Zapfen vorgesehen sind bzw. je länger die vorgesehene Leiste ausgeführt ist, desto besser ist die Führung beim Einstellen eines Reagenzienbehälters in das Reagenzienkarussell. Außerdem wird auf diese Weise auch die optimale Fixierung im Betrieb gewährleistet.

Bevorzugt ist das Reagenzienkarussell einstückig und besonders bevorzugt als Spritzgußteil ausgebildet.

Das automatisierte Analysensystem gemäß der vorliegenden Erfindung umfasst ein Reagenzienkarussell der zuvor beschriebenen Art sowie austauschbare Reagenzienbehälter wie zuvor beschrieben.

Vorzugsweise sind manche Flüssigkeitsbehälter so bemessen, dass sie im wesentlichen die gesamte Fachgrundfläche einnehmen und manche so, dass sie nur einen Teil der Fachgrundfläche einnehmen, wobei sich der von dem Flüssigkeitsbehälter eingenommene Bereich zwischen der radial äußeren oder der radial inneren Begrenzung eines Faches im Reagenzienkarussell und Vorsprüngen, Zapfen oder Leisten an der seitlichen Fachbegrenzung für den Anschlag mit entsprechenden Positionierungsanschlägen an dem Reagenzienbehälter erstreckt.

Diese Ausführungsformen haben den Vorteil der Materialeinsparung bei Reagenzienbehältern für geringere Reagenzienvolumina.

Das erfindungsgemäße Analysensystem ermöglicht die äußerst flexible Verwendung von verschiedenen Flüssigkeitsbehältern in ein und dem selben Reagenzienkarussell. So können in einem Karussell sowohl a) einkammerige Flüssigkeitsbehälter gemäß der vorliegenden Erfindung verwendet werden, die sich über die gesamte Fachgrundfläche erstrecken als auch b) einkammerige Flüssigkeitsbehälter, die sich zwischen einem Vorsprung und einer radial äußeren oder radial inneren Begrenzung eines Faches im Reagenzienkarussell erstrecken. Des weiteren können Flüssigkeitsbehälter verwendet werden, die c) zweikammerig aufgebaut sind, wobei sich der Reagenzienbehälter sowohl über die gesamte Fachgrundfläche erstrecken kann als auch d) lediglich in einem Teil zwischen einem Vorsprung und einer radialen Begrenzung. Weiterhin können auch e) mehrkammerige Reagenzienbehälter verwendet werden, die sich lediglich in einem durch einen Vorsprung begrenzten Teil des Faches befinden oder das gesamte Fach ausfüllen, wobei Kammern auch als Blindkammer, d. h. ohne Öffnung, ausgestaltet sein können. Wesentlich ist bei allen Reagenzienbehältern, dass sie in das erfindungsgemäße Analysensystem adapterfrei positionsstabil eingesetzt werden können. Hieraus ergeben sich vielfältige Kombinationsmöglichkeiten in der praktischen Anwendung. Ferner erfordert das erfindungsgemäße System nicht das Vorsehen von verschleißanfälligen Federn o.ä., um beispielsweise kleinere Behälter in den Fächern zu fixieren.

Die entscheidenden Vorteile sind neben der erlangten hohen Flexibilität a) die Einsparung der Anschaffung verschiedener Karussells für verschiedene Anwendungen, b) die Möglichkeit der Verwendung verkürzter Reagenzienbehälter, ohne dass zusätzlich Adapter oder verschleißanfällige Federn eingesetzt werden müssen, und c) die Möglichkeit der gleichzeitigen Verwendung von verschiedenen Reagenzienbehältern in einem Karussell. Die Möglichkeit der Verwendung verkürzter Reagenzienbehälter dient auch der Einsparung von Materialkosten bei der Produktion der Reagenzienbehälter. Dies ist ein ganz wesentlicher Punkt, da es sich bei den Flüssigkeitsbehältern um Verbrauchsmaterialien handelt, die üblicherweise nur einmal zum Einsatz kommen und nach dem Verbrauch der Reagenzien verworfen werden.

Weitere bevorzugte Merkmale und Merkmalskombinationen der vorliegenden Erfindung ergeben sich aus den anliegenden Figuren sowie der nachfolgenden Beschreibung der Figuren. Hierbei zeigen:
- Figur 1: verschiedene Ansichten und Darstellungen einer Ausführungsform eines einkammerigen Reagenzienbehälters gemäß der vorliegenden Erfindung,
- Figur 2: verschiedene Ansichten und Darstellungen einer Ausführungsform eines zweikammerigen Reagenzienbehälters gemäß der vorliegenden Erfindung,
- Figur 3: verschiedene Ansichten und Darstellungen einer Ausführungsform eines verkürzten zweikammerigen Reagenzienbehälters gemäß der vorliegenden Erfindung,
- Figur 4: eine Draufsicht von oben auf eine Ausführungsform eines Reagenzienkarussells gemäß der vorliegenden Erfindung und
- Figur 5: eine perspektivische Ansicht von schräg oben das Reagenzienkarussell gemäß Figur 4.

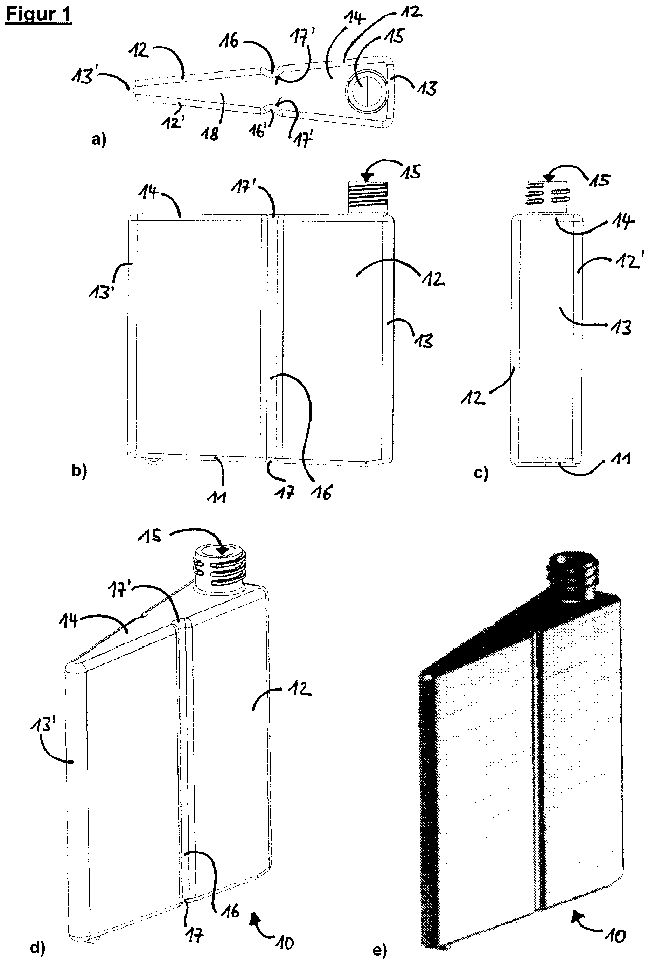

Die Figuren 1 a) bis d) sind graphische Darstellungen eines Reagenzienbehälters gemäß der vorliegenden Erfindung aus verschiedenen Ansichten, wobei es sich bei dem dargestellten Reagenzienbehälter um eine einkammerige Ausführungsform handelt.

In Figur 1 a) ist die Ansicht des Reagenzienbehälters 10 von oben dargestellt. In dieser Darstellung sind zu erkennen das Behälterdach 14, die Seitenwände 12 und 12' sowie die Behälterrückwand 13 als auch die Behältervorderwand 13'. In der Draufsicht von oben weist der in dieser Darstellung abgebildete Reagenzienbehälter einen im wesentlichen dreieckigen Querschnitt auf. Im Behälterdach 14 ist eine Öffnung 15 vorgesehen. In dieser Ansicht ist auch zu erkennen, daß im Behälterdach 14 Aussparungen 17' vorgesehen sind, in sich in Positionierungsnuten 16, 16' fortsetzen. Die Positionierungsnuten 16, 16' sind als Teil der Seitenwände 12, 12' ausgebildet und ragen in den Behälterinnenraum hinein.

Figur 1 b) ist eine Seitenansicht der Ausführungsform dieses Reagenzienbehälters. In dieser Darstellung ist zu erkennen, daß sich die Positionierungsnut 16 im wesentlichen senkrecht über die gesamte Behälterseitenwand 12 erstreckt und auch auf der Unterseite in eine Aussparung 17 im Behälterboden 11 mündet. Darüber hinaus ist in dieser Darstellung zu erkennen, daß die Öffnung 15 ein Gewinde aufweist. Demzufolge ist die Öffnung 15 bei dieser Ausführungsform mit einem Schraubdeckel verschließbar.

Figur 1 c) ist eine Draufsicht auf die Behälterrückwand 13 des Reagenzienbehälters. Figur 1 d) ist eine perspektivische Ansicht des Reagenzienbehälters. Figur 1 e) ist eine plastische Darstellung der Ansicht des erfindungsgemäßen Reagenzienbehälters aus Figur 1 d).

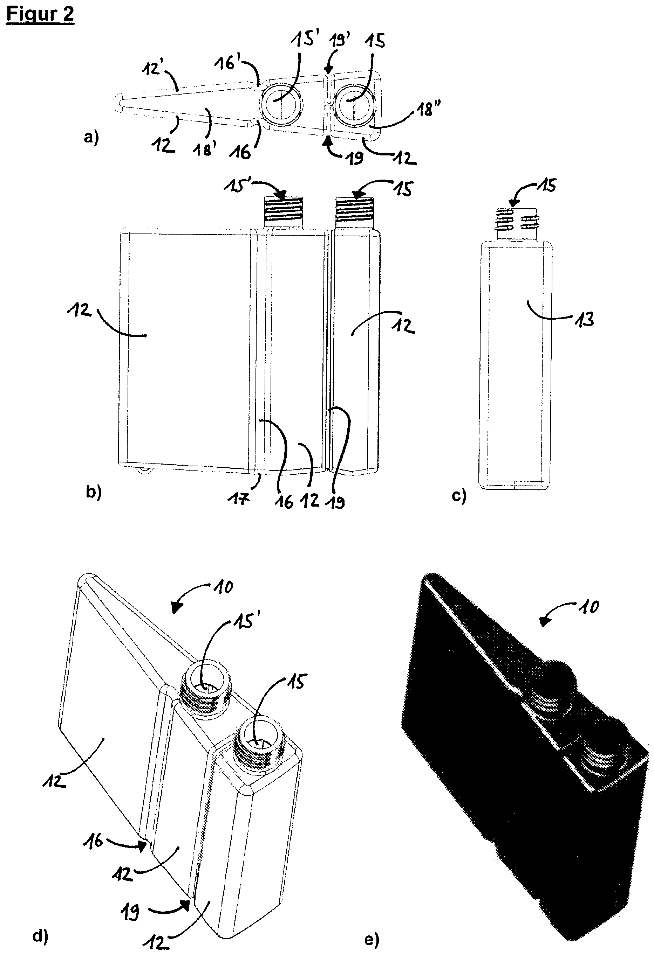

Die Figur 2 umfaßt verschiedene Ansichten einer graphischen Darstellung eines zweikammerigen Reagenzienbehälters gemäß der vorliegenden Erfindung sowie eine plastische Darstellung (Figur 2 e) dieser Ausführungsform. Die Ansichten a) bis c) sind so gewählt, wie in Figur 1. Die perspektivischen Ansichten der Abbildungen d) und e) sind im Gegensatz zu den entsprechenden Abbildungen der Figur 1 nicht von schräg vorne oben, sondern von schräg hinten oben dargestellt.

In Figur 2 a) sind im wesentlichen die gleichen Merkmale zu erkennen, wie bereits für Figur 1 beschrieben. Zusätzlich weist die Ausführungsform der Figur 2 eine Einschnürung 19 der Seitenwand 12 sowie eine Einschnürung 19' der Seitenwand 12' auf. Diese Einschnürungen 19, 19' sind einander gegenüberliegend und treffen in der Mitte des Reagenzienbehälters aufeinander, wodurch der Reagenzienbehälter in zwei separate Kammern 18, 18' unterteilt wird. Beide Kammern 18, 18' weisen jeweils eine verschraubbare Öffnung 15, 15' auf.

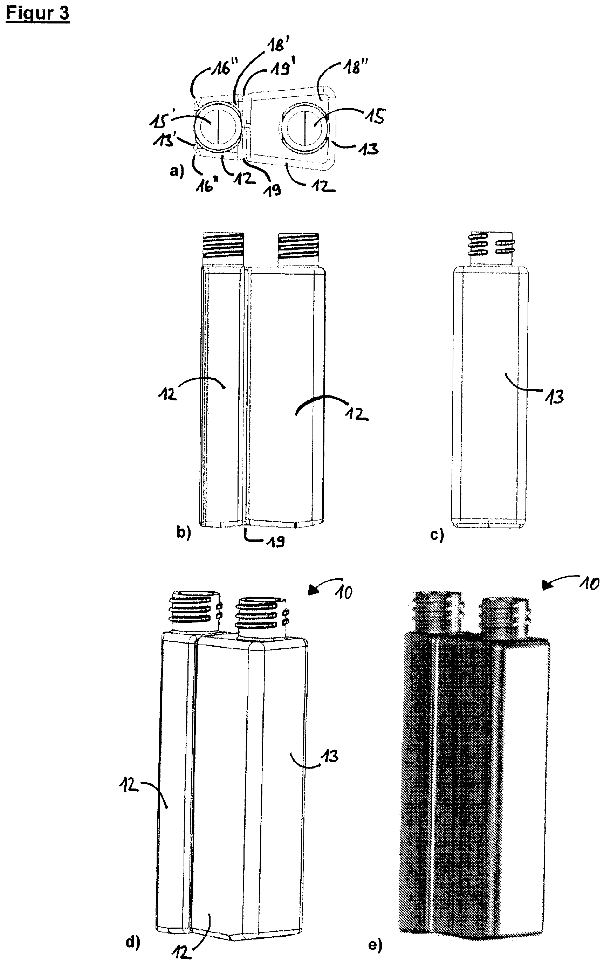

Figur 3 zeigt graphische und plastische Darstellungen a) bis e) eines erfindungsgemäßen verkürzten, zweikammerigen Reagenzienbehälters. Die Grundfläche des Reagenzienbehälters ist aufgrund der Verkürzung im wesentlichen trapezförmig. Der Reagenzienbehälter 10 wird auch bei dieser Ausführungsform durch Einschnürungen 19, 19' der Seitenwände 12 in zwei Kammern 18, 18' unterteilt. Wie auch bei der Ausführungsform von Figur 2 sind beide Kammern 18, 18' mit verschließbaren Öffnungen 15, 15' versehen. Besonders ist bei dieser Ausführungsform, daß sie Positionierungsanschlagflächen 16" aufweist, die im wesentlichen als Abfasung der Kante am Übergang der Seitenwände 12 in die Vorderwand 13' ausgebildet sind.

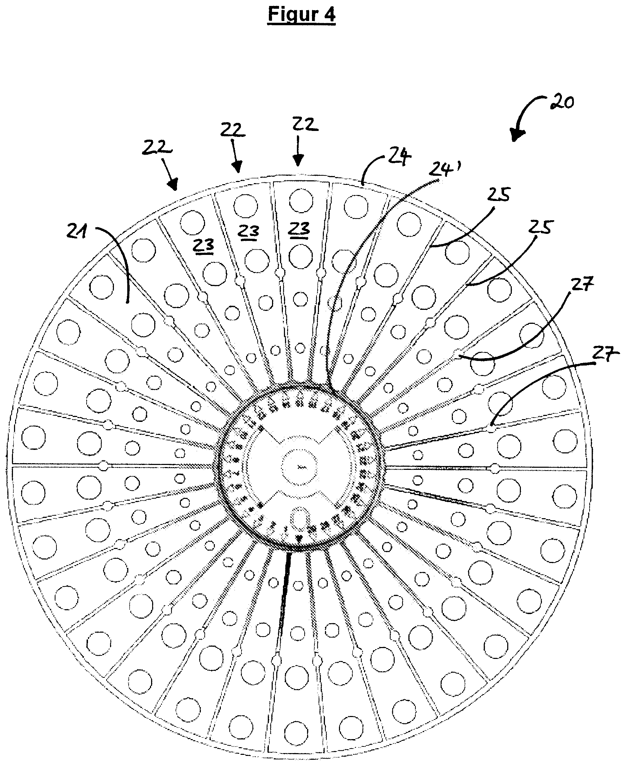

Figur 4 ist die Darstellung einer Ausführungsform eines Reagenzienkarussells 20 in der Draufsicht von oben. Dargestellt sind u.a. die Karussellgrundfläche 21 und die auf dieser Karussellgrundfläche radiär angeordneten Fächer 22, die zur Aufnahme von Reagenzienbehältern gemäß der Erfindung ausgestaltet sind. Die Fächer 22 weisen eine im wesentlichen dreieckige bis kreissektorförmige Fachgrundfläche 23 auf. In ihrer radialen Ausdehnung werden die Fächer 22 in Richtung Karussellmittelpunkt von der radialen Begrenzung 24' und nach außen durch die radiale Begrenzung 24 begrenzt. An den Seiten werden die Fächer 22 durch die seitlichen Begrenzungen 25 begrenzt. Auf den seitlichen Begrenzungen sind in den Fachinnenraum vorspringende Leisten 27 vorgesehen. Diese Leisten 27 sind so ausgebildet, daß sie mit den an den erfindungsgemäßen Reagenzienbehältern vorgesehenen Nuten 16, 16' bzw. Anschlagflächen 16" in Eingriff treten. Das dargestellte Reagenzienkarussell 20 ist einstückig als spritzgegossenes Teil ausgebildet.

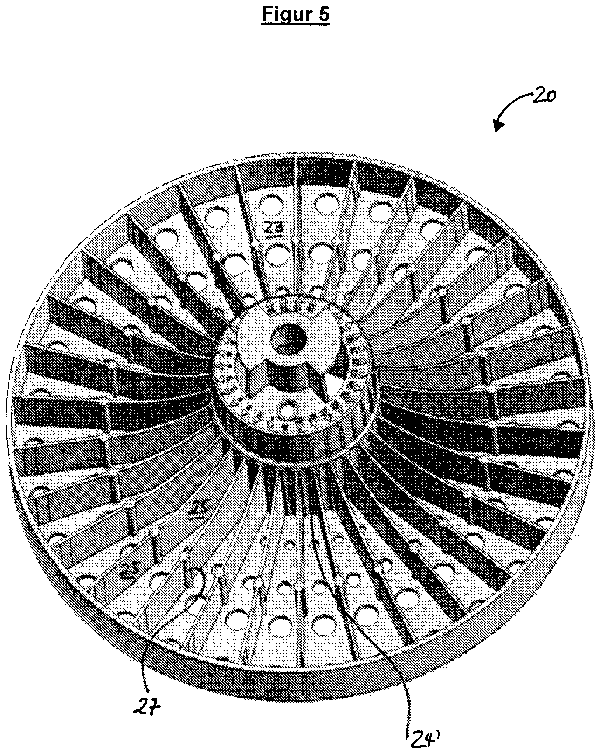

Figur 5 ist eine perspektivische Ansicht der in Figur 4 dargestellten Ausführungsform eines erfindungsgemäßen Reagenzienkarussells. In dieser Darstellung sind neben den Merkmalen, die bereits aus Figur 4 ersichtlich sind, zusätzlich zu erkennen die Ausgestaltung der radialen und seitlichen Begrenzungen 24, 24' und 25 in Form von Trennwänden sowie die Ausgestaltung des Vorsprungs 27 in Form einer sich im wesentlichen senkrecht von der Karussellgrundfläche 21 erstreckenden, durchgehenden Leiste 27 über die gesamte Höhe der seitlichen Begrenzung 25.

Von einer gemeinsamen Darstellung von Reagenzienkarussell und Reagenzienbehälter in einem automatisierten Analysensystem gemäß der vorliegenden Erfindung wird abgesehen, da für den Fachmann alle Möglichkeiten der Kombination von erfindungsgemäßen Reagenzienbehältern in dem erfindungsgemäßen Reagenzienkarussell ersichtlich sind, und eine entsprechende Darstellung zum Verständnis der Erfindung nicht erforderlich ist. So ist dem Fachmann klar, daß das Reagenzienkarussell gemäß Figuren 4 und 5 sowohl mit Reagenzienbehältern der in Figur 1 dargestellten Ausführungsform als auch mit Reagenzienbehältern der Ausführungsformen, die in den Figuren 2 und 3 dargestellt sind, bestückt werden kann. Weiterhin ist offensichtlich, daß das Reagenzienkarussell gemäß Figuren 4 und 5 mit Reagenzienbehältern eines Typs als auch mit Reagenzienbehältern der verschiedenen erfindungsgemäßen Typen gleichzeitig bestückt werden kann.

### Bezuqszeichen:

- 10: Reagenzienbehälter
- 11: Behälterboden
- 13: Behälterrückwand
- 13': Behältervorderseite
- 12,12': Behälterseitenwände
- 14: Behälterdach
- 15,15': Behälteröffnung
- 16,16': Positionierungsnut
- 16": Positionierungsanschlagflächen
- 17,17': Aussparung
- 18: Behälterinnenraum
- 18',18": Kammer
- 19,19': Einschnürung
- 20: Reagenzienkarussell
- 21: Karussellgrundfläche
- 22: Fächern
- 23: Fachgrundfläche
- 24,24': radiale Begrenzung
- 25,25': seitliche Begrenzung
- 27: Vorsprung

## Patentansprüche

1. Automatisiertes Analysensystem mit einem Reagenzienkarussell (20) und mit austauschbaren Reagenzienbehältern (10) verschiedener Größen für Flüssigreagenzien, wobei
▪ das Reagenzienkarussell (20) eine im wesentlichen kreisförmige Karussellgrundfläche (21) und auf dieser Karussellgrundfläche (21) radiär angeordnete Fächer (22) zur Aufnahme der Reagenzienbehälter (10) aufweist, wobei die Fächer (22) von sich radial erstreckenden Trennwänden (25) begrenzt sind, die wenigstens einen zum Fachinnenraum weisenden Vorsprung (27) für einen Eingriff mit einer Positionierungsnut (16, 16') oder einer Positionierungsanschlagfläche (16") eines Reagenzienbehälters (10) aufweisen, und
▪ die Reagenzienbehälter (10) mit im wesentlichen kreissektorförmigem, trapezförmigem oder dreieckigem Behälterboden (11) und Behälterdach (14) und mit sich von dem Behälterboden (11) zu dem Behälterdach (14) im wesentlichen senkrecht erstreckenden und von einer Behälterrückwand (13) zu einer Behältervorderseite (13') aufeinander zulaufenden Behälterseitenwänden (12, 12') ausgeführt sind, wobei das Behälterdach (14) wenigstens eine verschließbare Behälteröffnung (15) aufweist, und an wenigstens einer Behälterseitenwand (12, 12') wenigstens eine vom Behälterboden ausgehende und sich vertikal in Richtung des Behälterdaches (14) erstreckende Positionierungsnut (16, 16') oder Positionierungsanschlagfläche (16") vorgesehen ist,
**dadurch gekennzeichnet, dass** die Reagenzienbehälter (10) adapterfrei positionsstabil in das Reagenzienkarussell (20) einzusetzen sind und ausgewählt sind unter
a) einkammerigen Reagenzienbehältern, die sich über die gesamte Grundfläche eines Faches (22) erstrecken,
b) einkammerigen Reagenzienbehältern, die sich zwischen einem Vorsprung (27) und einer radial äußeren oder radial inneren Begrenzung eines Faches (22) erstrecken,
c) zweikammerigen Reagenzienbehältern, die sich über die gesamte Grundfläche eines Faches (22) erstrecken,
d) zweikammerigen Reagenzienbehältern, die sich zwischen einem Vorsprung (27) und einer radial äußeren oder radial inneren Begrenzung eines Faches (22) erstrecken, und
e) mehrkammerigen Reagenzienbehältern, die sich lediglich in einem durch einen Vorsprung (27) begrenzten Teil des Faches (22) befinden oder das gesamte Fach (22) ausfüllen,
wobei in ein und demselben Reagenzienkarussell (20) sowohl die Reagenzienbehälter a) als auch die Reagenzienbehälter b), c), d) und e) verwendet werden können.

2. Automatisiertes Analysensystem nach Anspruch 1, **dadurch gekennzeichnet, daß** wenigstens einer der Reagenzienbehälter an beiden Behälterseitenwänden (12, 12') jeweils wenigstens eine vom Behälterboden ausgehende und sich vertikal in Richtung des Behälterdaches (14) erstreckende Positionierungsnut (16, 16') oder Positionierungsanschlagfläche (16") vorgesehen ist.

3. Automatisiertes Analysensystem nach Anspruch 2, **dadurch gekennzeichnet, daß** bei wenigstens einem der Reagenzienbehälter die an beiden Behälterseitenwänden (12, 12') vorgesehenen Positionierungsnuten (16, 16') oder Positionierungsanschlagflächen (16") in gleichem Abstand von der Behälterrückwand (13) angeordnet sind.

4. Automatisiertes Analysensystem nach Anspruch 2, **dadurch gekennzeichnet, daß** bei wenigstens einem der Reagenzienbehälter die an beiden Behälterseitenwänden (12, 12') vorgesehenen Positionierungsnuten (16, 16') in unterschiedlichem Abstand von der Behälterrückwand (13) angeordnet sind.

5. Automatisiertes Analysensystem nach einem der Ansprüche 1 bis 4, **dadurch gekennzeichnet, daß** sich bei wenigstens einem der Reagenzienbehälter die Positionierungsnuten (16, 16') oder Positionierungsanschlagflächen (16") vom Behälterboden bis zum Behälterdach (14) erstrecken.

6. Automatisiertes Analysensystem nach einem der Ansprüche 1 bis 4, **dadurch gekennzeichnet, daß** bei wenigstens einem der Reagenzienbehälter die Positionierungsnuten (16, 16') oder Positionierungsanschlagflächen (16") ausgehend vom Behälterboden in einem Abstand zum Behälterdach (14) enden.

7. Automatisiertes Analysensystem nach einem der Ansprüche 1 bis 6, **dadurch gekennzeichnet, daß** bei wenigstens einem der Reagenzienbehälter der Behälter wenigstens eine Trennwand oder Einschnürung (19) aufweist, die den Behälterinnenraum (18) in wenigstens zwei separate Kammern (20, 20') unterteilt.

8. Automatisiertes Analysensystem nach Anspruch 7, **dadurch gekennzeichnet, daß** bei wenigstens einem der Reagenzienbehälter für den Zugang zu jeder der Kammern (20, 20') eine verschließbare Behälteröffnung (15, 15') in dem Behälterdach (14) vorgesehen ist.

9. Automatisiertes Analysensystem nach Anspruch 7 oder 8, **dadurch gekennzeichnet, daß** bei wenigstens einem der Reagenzienbehälter der Behälter genau zwei separate Kammern (20, 20') aufweist mit einem Verhältnis der Innenvolumina von 3 bis 5 zu 1.

10. Automatisiertes Analysensystem nach Anspruch 9, **dadurch gekennzeichnet, daß** wenigstens einer der Reagenzienbehälter zwei verschließbare Behälteröffnungen (15, 15') in dem Behälterdach (14) mit einem Abstand zueinander von 0,1 bis 2 cm, vorzugsweise 0,3 bis 1 cm, besonders bevorzugt 0,4 bis 0,5 cm aufweist.

11. Automatisiertes Analysensystem nach einem der Ansprüche 1 bis 10, **dadurch gekennzeichnet, daß** wenigstens einer der Reagenzienbehälter aus Kunststoff und vorzugsweise im Extrusionsblasverfahren hergestellt ist.

12. Automatisiertes Analysensystem nach einem der Ansprüche 1 bis 11, **dadurch gekennzeichnet, daß** an wenigstens einem der Reagenzienbehälter eine optisch, elektronisch oder mechanisch erfaßbare Markierung vorgesehen ist, vorzugsweise ein Barcode oder Transponder.

## Claims

1. Automated analysis system with a reagent carousel (20) and with exchangeable reagent containers (10) of different sizes for liquid reagents, wherein
▪ the reagent carousel (20) has a substantially circular carousel base area (21) and compartments (22), which are radially arranged on this carousel base area (21), for receiving the reagent containers (10), wherein the compartments (22) are delimited by radially extending dividing walls (25), which have at least one protrusion (27) which points towards the compartment interior for engagement with a positioning groove (16, 16') or a positioning stop surface (16") of a reagent container (10), and
▪ the reagent containers (10) are designed with a substantially circular sector-shaped, trapezoidal or triangular container base (11) and container top (14) and with container side walls (12, 12') which extend substantially perpendicularly from the container base (11) to the container top (14) and taper towards one another from a container rear wall (13) to a container front side (13'), wherein the container top (14) has at least one sealable container opening (15), and at least one positioning groove (16, 16') or positioning stop surface (16") which starts from the container base and extends vertically in the direction of the container top (14) is provided on at least one container side wall (12, 12'),
**characterized in that** the reagent containers (10) are to be inserted in a positionally stable manner into the reagent carousel (20) without adapters and are selected from
a) single-chamber reagent containers, which extend over the entire base area of a compartment (22),
b) single-chamber reagent containers, which extend between a protrusion (27) and a radially outer or radially inner boundary of a compartment (22),
c) two-chamber reagent containers, which extend over the entire base area of a compartment (22),
d) two-chamber reagent containers, which extend between a protrusion (27) and a radially outer or radially inner boundary of a compartment (22), and
e) multi-chamber reagent containers, which are located only in a part of the compartment (22) delimited by a protrusion (27) or fill the entire compartment (22),
wherein both the reagent containers a) and the reagent containers b), c), d) and e) can be used in one and the same reagent carousel (20).

2. Automated analysis system according to claim 1, **characterized in that** in each case at least one positioning groove (16, 16') or positioning stop surface (16") which starts from the container base and extends vertically in the direction of the container top (14) is provided on both container side walls (12, 12') of at least one of the reagent containers.

3. Automated analysis system according to claim 2, **characterized in that** in at least one of the reagent containers the positioning grooves (16, 16') or positioning stop surfaces (16") provided on both container side walls (12, 12') are arranged at the same distance from the container rear wall (13).

4. Automated analysis system according to claim 2, **characterized in that** in at least one of the reagent containers the positioning grooves (16, 16') provided on both container side walls (12, 12') are arranged at different distances from the container rear wall (13).

5. Automated analysis system according to one of claims 1 to 4, **characterized in that** in at least one of the reagent containers the positioning grooves (16, 16') or positioning stop surfaces (16") extend from the container base up to the container top (14).

6. Automated analysis system according to one of claims 1 to 4, **characterized in that** in at least one of the reagent containers the positioning grooves (16, 16') or positioning stop surfaces (16") starting from the container base end at a distance from the container top (14).

7. Automated analysis system according to one of claims 1 to 6, **characterized in that** in at least one of the reagent containers the container has at least one dividing wall or constriction (19), which subdivides the container interior (18) into at least two separate chambers (20, 20').

8. Automated analysis system according to claim 7, **characterized in that** in at least one of the reagent containers a sealable container opening (15, 15') is provided in the container top (14) for access to any of the chambers (20, 20').

9. Automated analysis system according to claim 7 or 8, **characterized in that** in at least one of the reagent containers the container has precisely two separate chambers (20, 20') with a ratio of the internal volumes of from 3 to 5:1.

10. Automated analysis system according to claim 9, **characterized in that** at least one of the reagent containers has two sealable container openings (15, 15') in the container top (14) with a distance from one another of from 0.1 to 2 cm, preferably 0.3 to 1 cm, particularly preferably 0.4 to 0.5 cm.

11. Automated analysis system according to one of claims 1 to 10, **characterized in that** at least one of the reagent containers is made from plastic and preferably in an extrusion blow moulding process.

12. Automated analysis system according to one of claims 1 to 11, **characterized in that** an optically, electronically or mechanically detectable marking is provided on at least one of the reagent containers, preferably a barcode or transponder.

## Revendications

1. Système d'analyse automatisé avec un carrousel de réactifs (20) et des récipients de réactifs (10) interchangeables de différentes tailles pour des réactifs liquides,
- le carrousel de réactifs (20) ayant une surface de base de carrousel (21) sensiblement circulaire et des cases (22) disposées de façon radiale sur cette surface de base de carrousel (21) et destinées à recevoir les récipients de réactifs (10), les cases (22) étant délimitées par des parois de séparation (25) s'étendant radialement qui comprennent au moins une avancée (27) orientée vers l'intérieur de la case pour un engagement avec une rainure de positionnement (16, 16') ou une surface de butée de positionnement (16"), et
- les récipients de réactifs (10) étant réalisés avec un fond de récipient (1) et un toit de récipient (14) de forme sensiblement de secteur de cercle, de trapèze ou de triangle et avec des parois latérales de récipient (12, 12') s'étendant sensiblement verticalement du fond de récipient (11) au toit de récipient (14) et s'approchant les unes des autres d'une paroi arrière de récipient (13) vers une paroi avant de récipient (13'), le toit de récipient (14) comprenant au moins une ouverture de récipient (15) apte à être fermée, et sur au moins une paroi latérale de récipient (12, 12') au moins une rainure de positionnement (16, 16') ou surface de butée de positionnement (16") partant du fond de récipient et s'étendant verticalement en direction du toit de récipient (14) étant prévue,
**caractérisé en ce que** les récipients de réactifs (10) sont à insérer dans le carrousel de réactifs (20) sans adaptateur et de façon stable en position et qu'ils sont choisis parmi
a) des récipients de réactifs à une seule chambre qui s'étendent sur la surface de base entière d'une case (22),
b) des récipients de réactifs à une seule chambre qui s'étendent entre une avancée (27) et une limite radialement extérieure ou radialement intérieure d'une case (22),
c) des récipients de réactifs à deux chambres qui s'étendent sur la surface de base entière d'une case (22),
d) des récipients de réactifs à deux chambres qui s'étendent entre une avancée (27) et une limite radialement extérieure ou radialement intérieure d'une case (22), et
e) des récipients de réactifs à plusieurs chambres qui se trouvent uniquement dans une partie de la case (22) délimitée par une avancée (27) ou qui remplissent la case (22) entière,
dans un même carrousel de réactif (20), aussi bien les récipients de réactifs a) que les récipients de réactifs b), c), d) et e) pouvant être utilisés.

2. Système d'analyse automatisé selon la revendication 1, **caractérisée en ce que** dans au moins un des récipients de réactifs, une rainure de positionnement (16, 16') ou surface de butée de positionnement (16") s'étendant sur les deux parois latérales de récipient (12, 12') respectivement du fond de récipient verticalement en direction du toit de récipient (14) est prévue.

3. Système d'analyse automatisé selon la revendication 2, **caractérisée en ce que** dans au moins un des récipients de réactifs, les rainures de positionnement (16, 16') ou surfaces de butée de récipient (16") prévues sur les parois latérales de récipient (12, 12') sont disposées à la même distance de la paroi arrière de récipient (13).

4. Système d'analyse automatisé selon la revendication 2, **caractérisé en ce que** dans au moins un des récipients de réactifs, les rainures de positionnement (16, 16') prévues sur les parois latérales de récipient (12, 12') sont disposées à des distances différentes de la paroi arrière de récipient (13).

5. Système d'analyse automatisé selon l'une des revendications 1 à 4, **caractérisé en ce que** dans au moins un des récipients de réactifs, les rainures de positionnement (16, 16') ou surfaces de butée de positionnement (16") s'étendent du fond de récipient jusqu'au toit de récipient (14).

6. Système d'analyse automatisé selon l'une des revendications 1 à 4, **caractérisé en ce que** dans au moins un des récipients de réactifs, les rainures de positionnement (16, 16') ou surfaces de butée de positionnement (16") partent du fond de récipient et terminent à une distance du toit de récipient (14).

7. Système d'analyse automatisé selon l'une des revendications 1 à 6, **caractérisé en ce que** pour au moins un des récipients de réactifs, le récipient comprend une paroi de séparation ou un étranglement (19) qui subdivise l'espace intérieur de récipient (18) en au moins deux chambres (20, 20') séparées.

8. Système d'analyse automatisé selon la revendication 7, **caractérisé en ce que** pour au moins un des récipients de réactifs, une ouverture de récipient (15, 15') apte à être fermée est prévue dans le toit de récipient (14) pour l'accès à chacune des chambres (20, 20').

9. Système d'analyse automatisé selon la revendication 7 ou 8, **caractérisé en ce que** pour au moins un des récipients de réactifs, le récipient comprend précisément deux chambres (20, 20') séparées avec un rapport de 3 à 5 à 1 entre les volumes intérieurs.

10. Système d'analyse automatisé selon la revendication 9, **caractérisé en ce qu'**au moins un des récipients de réactifs comprend deux ouvertures de récipient (15, 15') aptes à être fermées dans le toit de récipient (14) avec une distance entre eux de 0,1 à 2 cm, de préférence 0,3 à 1 cm, de façon particulièrement préférée de 0,4 à 0,5 cm.

11. Système d'analyse automatisé selon l'une des revendications 1 à 10, **caractérisé en ce qu'**au moins un des récipients de réactifs est réalisé en matière plastique et de préférence selon le procédé d'extrusion par soufflage.

12. Système d'analyse automatisé selon l'une des revendications 1 à 11, **caractérisé en ce que** sur au moins un des récipients de réactifs, un marquage pouvant être saisi optiquement, électroniquement ou mécaniquement est prévu, de préférence un code barre ou un transpondeur.
